# EUROPEAN PATENT APPLICATION

(11) **EP 2 096 730 A1**
(43) Date of publication of application: **02.09.2009**
(21) Application number: 08102144.6
(22) Date of filing: 29.02.2008
(51) Int. Cl.: H02G 15/115, H02G 15/192

(54) **A cable casing and a method of producing such a casing**

(71) Applicant: ABB Technology AG, 8050 Zürich (CH)
(72) Inventor: Tranefors, Kai, 504 93 Borås (SE); Bexander, Björn, 414 78 Göteborg (SE); Källberg, Lars, 441 51 Alingsås (SE); Persson, Martin, 441 39 Alingsås (SE)
(74) Representative: Dahlstrand, Björn

(57) **Abstract**

A cable casing (1) comprising a tubular metallic envelope (10), said envelope (10) having at least one opening (4, 5) for the introduction of an electric power cable into it and at least one further opening (19) for the introduction of a further element (24) into the casing (1). The casing also comprises a tubular projection (11) extending from said further opening (19) of said envelope (10), wherein said projection (11) is hermetically sealed.

## Description

### TECHNICAL FIELD

The present invention relates to a cable casing comprising a tubular metallic envelope, said envelope having at least one opening for the introduction of an electric power cable into it and at least one further opening for the introduction of a further element into the casing.

The invention also relates to a method of producing such a cable casing.

The cable casing will, typically, be a cable joint casing or a cable termination casing (a cable joint casing may be regarded as two opposite, interconnected cable termination casings). It should be noted that the casing is not a part of any cable itself, but that it forms a cable accessory. Typically the casing forms a casing for an electric power distribution cable, preferably a high voltage cable, wherein high voltage is referred to as 1 kV and above.

### BACKGROUND OF THE INVENTION

When a power cable joint has been assembled there is usually conducted a test for detecting partial discharges, PD, inside the casing. In order to conduct these tests a cable needs to be attached to a specific point on the joint body. This PD-cable has to extend trough the wall of the casing. The same applies to any fiberoptics that need to be accessed. The number of openings or exits through which such further cables might extend may vary depending on the specific type of installation.

Prior art suggests that a number of openings be provided in the wall of a cable casing and that said openings be sealed by means of rubber plugs inserted into the openings. When an accessory cable, such as an opto cable, is to be introduced into or guided out of the casing the rubber plug is removed and the cable is introduced into the opening. A ring-shaped rubber sealing or the like may be used in the opening in order to prevent water from leaking into the casing.

However, in order to prevent water or other unwanted fluid from leaking into the interior of the casing during use thereof, the number of such openings must be adapted to the number of possible accessory cables for each application. This is because the above-mentioned rubber plugs do not confer an absolute sealing against water intrusion.

### THE OBJECT OF THE INVENTION

It is an object of the present invention to provide a cable casing that will be prepared for relatively easy insertion of at least one, preferably a plurality, of further elements, preferably cables, through a wall thereof, and that guarantees that the casing be water proof, also if no such further elements are inserted.

A further object is to provide a casing the design of which promotes effective sealing thereof also when an element such as a further cable is introduced and permitted to extend through said further opening.

### SUMMARY OF THE INVENTION

The object of the invention is achieved by means of the initially defined cable casing, which is **characterised in that** it comprises a tubular projection extending from said further opening of said envelope and that said projection is hermetically sealed. Hermetically sealed is referred to as absolutely water proof, such that water, in whatever aggregation state, is prevented from passing through the tubular projection into the casing. In other words, the tubular projection in itself, as well as its interface with the wall of the envelope, is perfectly sealed against penetration of water, or any corresponding liquid or gas, into the casing. The casing itself, being made of a metallic body, will also have the function of a perfect water barrier. In order to achieve perfect sealing of the casing also in the region where the power cable enters the latter it is preferred that an end of the casing be joined to metallic water barrier sheath, or screen, of the cable. Such joining may be achieved by means of brazing. It should also be mentioned that the scope of the invention includes that the projection may project either into the inner volume of the casing or out from the wall of the casing. For the time being it is preferred that the tubular projection project out from the wall of the casing, thereby being easier to access when the casing has been assembled. The wall from which the tubular projection extends is assumed to be an outer wall of the casing, that might be directly subjected to the a surrounding mass of water when the casing is used in an underwater application.

According to a preferred embodiment, said tubular projection comprises a metallic body. Thereby, attachment to the metallic envelope is facilitated since welding will be an option and will permit a perfect sealing between the metallic envelope and the tubular projection. A metallic material will also have the advantage of being relatively strong and ductile. Other optional materials such as ceramic materials might be conceivable, but are not preferred for the time being. Preferably, the metal or metal alloy of the tubular projection is of the same composition as that of the metallic envelope.

According to a further embodiment said tubular projection is provided with a metallic cap forming a hermetic sealing on said tubular projection. The cap may be attached to the rest of the tubular projection by forming an integrated part with the latter, i.e. presenting a one-piece unit with the remaining part of the projection. Thereby, a perfect, or hermetic, sealing is promoted. As an alternative it may be a separate part attached to the remaining part of the projection in a removable manner, for example through a thread joint. In a wide meaning the invention includes also such embodiments, since also this kind of joint, if for example being of certain length and presenting fine tolerances, will inhibit intrusion of water, independently of aggregation state, into the casing. However, in a more narrow meaning of the invention, such solutions are excluded from the scope of the invention, since, in practice, they will hardly be possible to implement with a maintained perfect sealing.

Preferably, said tubular projection has a length of at least 1 cm, preferably at least 5 cm. Thereby, a sleeve or the like may be attached and permitted to overlap the projection and any element, such as a cable, in the region where the latter enters the projection. Thereby, a further sealing of a installed cable is facilitated. Moreover, if an element such as a cable, extends through said projection and there is a tight relationship, i.e. no spacing, between the peripheries thereof, an improved sealing may be achieved, since the distance that any medium, such as water, need to pass through a material such as a polymer (the outer layer of the cable) will correspond to the length of the tubular projection.

According to one embodiment said tubular projection is provided with a notch that facilitates removal of an end part of said tubular projection from the remaining part thereof. Especially when the end part, for example the above-mentioned end cap, is and integrated part of the tubular projection, a notch will facilitate opening of the projection, thereby enabling conducting of an element such as a cable through said projection. For example, the notch may act as a marking of the projection indicating a location where sawing or cutting off of the projection is preferred.

Preferably, said notch is a circumferential notch. Thereby, it will be easily detected and really promote cutting off of the projection. If the notch is circumferential it will be easy to detect from any angle and will also promote cutting of all the way around the projection.

According to one embodiment said notch is provided in an end region opposite to an end region in which the tubular element is attached to the wall of said envelope. Thereby, only a relatively short part of the projection will be cut off, and a part long enough for facilitating and improving further sealing of the cable or the like introduced through the projection will be provided for, in accordance with the principles presented earlier in this text.

Preferably, the casing comprises an electrically insulating outer cover that covers the outer surface of said envelope and said tubular projection. Thereby, the tubular projection is to a certain extent mechanically and chemically protected from the environment, and also electrically insulated from the latter.

According to a preferred embodiment an inner diameter of said tubular projection is adapted to correspond to the outer diameter of at least one accessory cable to be introduced into the casing. The advantage of having a long and tight contact between the outer periphery of the further element and the inner periphery of the tubular projection has already been discussed. Accordingly, it is an advantage if, already at the production stage, the dimension of the inner diameter of the projection is adapted to the outer diameter of the element that is assumed to extend through said projection.

Preferably, the casing comprises a plurality of said tubular projections. Thereby, the casing will be prefabricated and prepared for different sorts of applications, requiring different numbers of further elements that are to be introduced into the casing from the outside thereof (or be taken out through the casing through the wall thereof).

Preferably, the inner diameters of different tubular projections are different. Thereby, a specific further element that is to extend through a projection may be associated to the projection the inner diameter of which fits best with the outer diameter of that element. Preferably, the inner diameters of the different projections are adapted to different elements, preferably cables, that, depending on the particular application, should penetrate the wall of the tubular envelope.

The object of the invention is also achieved by means of the method initially defined, which is **characterised in that** it comprises the steps of forming a tubular metallic envelope, providing the latter with an opening for the introduction of an electric power cable into it, providing the envelope with at least one further opening and sealingly attaching a tubular projection onto the wall of the envelope such that it covers said further opening.

According to a preferred embodiment the tubular projection comprises a metallic material and it is welded to the wall of the metallic envelope.

The invention also includes an electric power cable installation in which a cable casing of a cable joint or cable termination is submersed in a mass of water, **characterised in that** said cable casing is a cable casing according to the invention.

Further features and advantages of the invention will be presented in the following detailed description of a preferred embodiment.

### BRIEF DESCRIPTION OF THE DRAWINGS

A preferred embodiment will now be described by way of example with reference to the accompanying drawing, on which:
Fig. 1 is a perspective view of a power cable casing according to the invention,
Fig. 2 is a partly cut view of the casing shown in fig. 1,
Fig. 3 is a cross section of a part of the casing shown in figs. 1 and 2, and
Fig. 4 is a cross section of the part shown in fig. 3 in its operative position with a cable mounted therein.

### DETAILED DESCRIPTION OF THE INVENTION

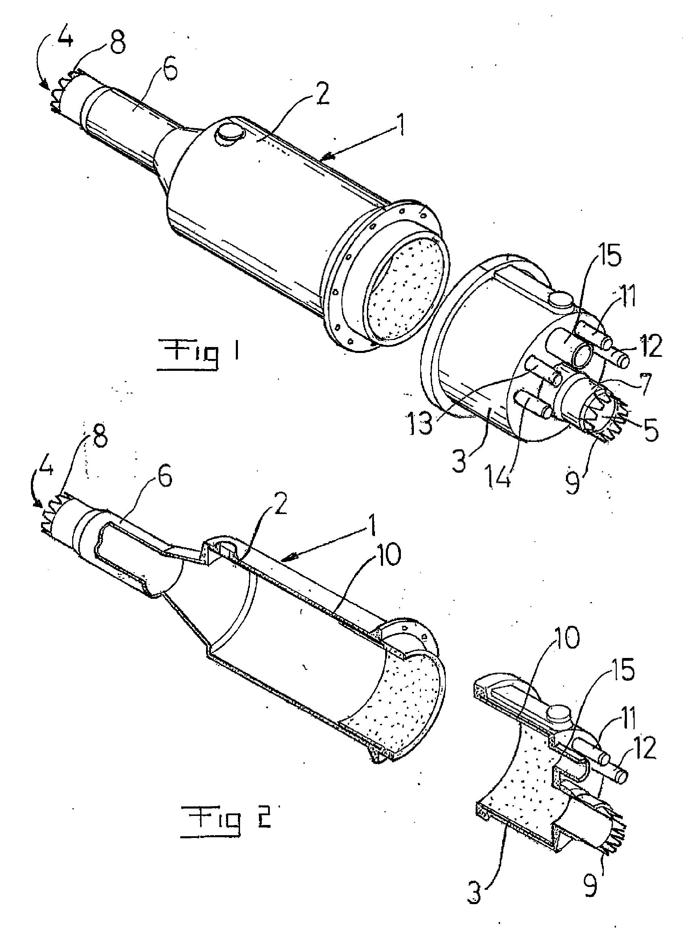

Fig. 1 shows a power cable casing 1 according to the invention. The casing 1 forms a cable joint casing. It comprises two tubular parts 2, 3 that together form the casing 1. In each opposite ends of the casing 1, which is tubular, there is provided an opening 4, 5 through which an electric power cable (not shown) is to enter the casing 1. A tubular extension 6, 7 of the casing provided with end tongues 8, 9 defines and delimits each of said openings 4, 5. In the region of said opening, in this case by the tongues 8, 9, a metallic envelope of the casing 1 is to be sealingly connected, for example by way of brazing, to a metallic screen or sheath of a power cable. Said screen or sheath of the power cable forms a water barrier in order to inhibit water from reaching inner layers, such as an inner electric insulation of the cable.

The casing 1 comprises a tubular metallic envelope 10 (partly visible in fig. 2). The envelope forms a water barrier that prevents water, in any aggregation state, from reaching the inside of the casing 1. It also carries the voltage of the screens of the cables to which it is connected, and controls an electric field generated by the power cable inside the casing during operation. Depending on whether the cable joint is a joint in which screens of the cables are separated or not, the envelope 10 may be continuous in the longitudinal direction of the casing 1 (no screen separation) or be discontinuous (screen separation). In the latter case the envelope 10, comprised by sub-parts in each of the tubular parts 2, 3 of the casing 1, is divided into two electrically disconnected parts separated by a layer of electrically insulating material in the interface or border between the two tubular parts 2, 3 of the casing 1. However, these examples of different designs of the envelope 10 are not crucial for the present invention, but should be regarded as part of the common knowledge of persons skilled in the art. The envelope 10 extends all the way to the tongues 8, 9, and the latter may be regarded as parts of the envelope 10.

As can be seen in figs. 1 and 2 there is provided a group of tubular projections 11-14 extending from the outer periphery of the casing 1. The projections 11-14 provide optional channels for entrance and exit of further elements into or out of the casing 1. Preferably, such further elements comprise cables, such as fibre optic cables used for the measurement of temperature inside the casing 1, or electric cables used for detection of partial discharges inside the casing 1 during operation. There is also provided a projection 15 predetermined for the conduction of a screen separation cable (not shown) there through the wall of the casing 1.

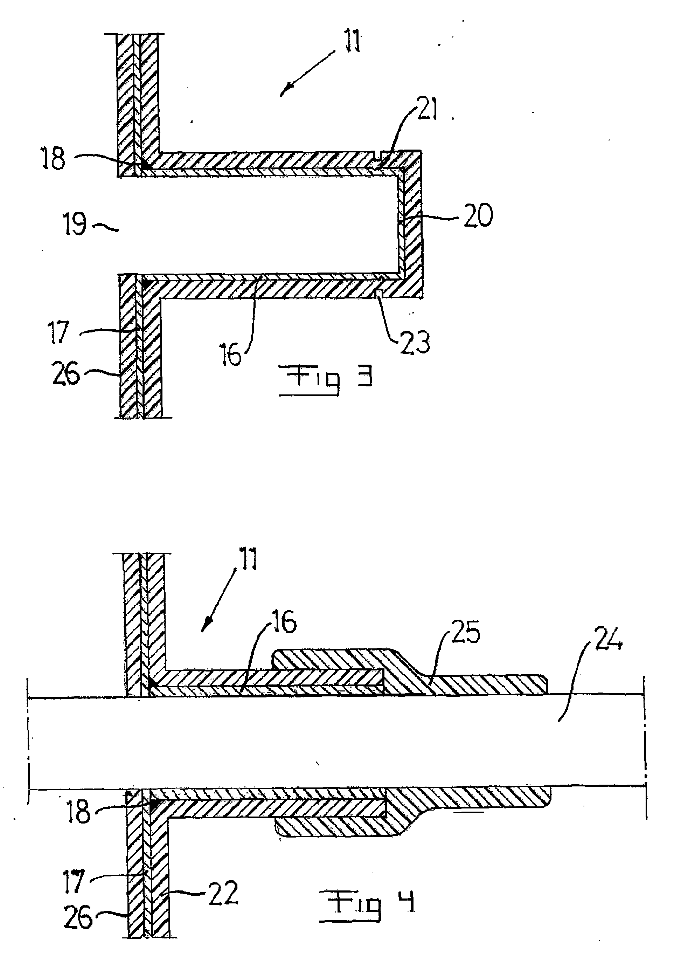

Fig. 3 shows a cross-section of one 11 of the projections 11-14 shown in figs. 1 and 2. Only one projection 11 will be described in detail, but it should be understood that the other projections 12-14 of said group of projections 11-14 are conceived to be designed in a corresponding manner. The projection 11 comprises a tubular metallic part 16 which is connected to a wall 17 of the tubular metallic envelope 10 by means of a weld joint 18. The tubular metallic part 16 is provided around an opening 19 in the wall 17. Both the opening 19 and tubular metallic part 16 has a circular inner periphery, and the diameter of the inner periphery of the tubular metallic part 16 is equal to or slightly smaller than that of the opening 19.

The tubular metallic part 16 of the projection 11 is also provided with an end cap 20. Here, the end cap 20 is integrated with the tubular metallic part 16. For example, the tubular metallic part 16 and the end cap 20 might have been formed in one single deep-drawing process or in one single moulding process. As an alternative, the end cap might be welded to the tubular metallic part 16. Thereby, the tubular projection 11 forms a hermetic sealing of the opening 19 in the wall 17 of the envelope 10, by defining a dense metallic water barrier. Of course, the barrier is also useful for, and might in fact be provided for the purpose of, inhibiting other media than water from leaking into (or out of) the casing 1.

The tubular metallic part 16 of the projection 11 comprises a circumferential notch 21 provided on the outer periphery thereof. The notch 21 is provided for the purpose of facilitating removal of the end cap 20 when the opening 19 is to be accessed from outside the casing 1, for example when any further element is to be inserted through the opening in order to extend through the wall of casing 1. The notch 21 is located closer to the end cap 20 than to the opposite end of the tubular metallic part 16, in which the latter is connected to the wall 17 of the tubular envelope 10.

On the outer periphery of the tubular envelope 10 of the casing 1, there is provided an outer cover 22. Preferably, the outer cover 22 comprises an electrically insulating and mechanically strong and chemically stable material such as any suitable polymer. It has the task of protecting the tubular envelope 10 against any kind of aggression from the environment, and also to electrically insulate the envelope 10. The cover 22 also covers each of the tubular projections 11-14, as well as the projection 15 provided for the purpose of guiding a screen separation cable. Accordingly, the tubular projection 11 comprises an outer cover 22 that protects and electrically insulates the tubular metallic part 16 thereof from the surrounding environment. The outer cover is provided with a marking, here a notch, 23 that indicates the position of the underlying notch 21 of the metallic tubular part 16. In this specific embodiment there is also provided an electrically insulating cover 26 at the inner periphery of the wall 17 of the tubular envelope 10.

When a further element such as a fibre optic cable is to be drawn through the wall of the casing 1, the end cap 20 of the tubular projection 11 is removed by cutting the tubular projection off at the location of the notch 21 of the tubular metallic part 16 thereof. Cutting may include sawing.

Fig. 4 shows the cut-off tubular projection 11 provided with a cable 24 that extends through the projection 11 in the longitudinal direction thereof. In order to electrically insulate the otherwise exposed end of the tubular metallic part 16 of the tubular projection 11, there is provided a sleeve 25 that overlaps the outer peripheries of the tubular projection 11 and the cable 24 in the region in which the latter exits the projection 11. For the purpose of enabling a sufficient length of such a sleeve to be provided, the part of the tubular projection 11 that remains after removal of the end cap 20 should be at least 1 cm, preferably at least 5 cm, or even at least 10 cm. The sleeve 25 may be formed by a shrinking tubing or by a wound tape. It comprises an electrically insulating material such as a polymer.

The tubular metallic part 16 of the tubular projection 11 may have a relatively low wall thickness, for example in the range of 1-3 mm. Preferably, it comprises an alloy that is easy to attach to the wall 17 of the envelope 10. Since the latter is preferably based on aluminium, it is preferred that also the tubular metallic part 16 of the tubular projection 11 be made of an aluminium-based material.

## Claims

1. A cable casing (1) comprising a tubular metallic envelope (10), said envelope (10) having at least one opening (4, 5) for the introduction of an electric power cable into it and at least one further opening (19) for the introduction of a further element (24) into the casing (1), **characterised in that** it comprises a tubular projection (11) extending from said further opening (19) of said envelope (10) and that said projection (11) is hermetically sealed.

2. A cable casing (1) according to claim 1, **characterised in that** said tubular projection (11) comprises a metallic body (16).

3. A cable casing (1) according to claim 1 or 2, **characterised in that** said tubular projection (11) is provided with a metallic cap (20) forming a hermetic sealing on said tubular projection (11).

4. A cable casing (1) according to any one of claims 1-3, **characterised in that** said tubular projection (11) has a length of at least 1 cm, preferably at least 5 cm.

5. A cable casing (1) according to any one of claims 1-4, **characterised in that** said tubular projection (11) is provided with a notch (21, 23) that facilitates removal of an end cap (20) of said tubular projection (11) from the remaining part thereof.

6. A cable casing (1) according to claim 5, **characterised in that** said notch (21, 23) is a circumferential notch.

7. A cable casing (1) according to claim 5 or 6, **characterised in that** said notch (21, 23) is provided in an end region opposite to an end region in which the tubular projection (11) is attached to the wall of said envelope (10).

8. A cable casing (1) according to any one of claims 1-7, **characterised in that** it comprises an electrically insulating outer cover (22) that covers the outer surface of said envelope (10) and said tubular projection (11).

9. A cable casing (1) according to any one of claims 1-8, **characterised in that** an inner diameter of said tubular projection (11) is adapted to correspond to the outer diameter of at least one accessory cable (24) to be introduced into the casing (1).

10. A cable casing (1) according to any one of claims 1-9, **characterised in that** it comprises a plurality (11-14) of said tubular projections (11).

11. A cable casing (1) according to claim 10, **characterised in that** the inner diameters of different tubular projections (11-14) are different.

12. A cable casing (1) according to any one of claims 1-11, **characterised in that** said casing (1) forms a cable termination casing or cable joint casing.

13. A method of producing a cable casing (1) according to any one of claims 1-12, **characterised in that** it comprises the steps of forming a tubular metallic envelope (10), providing the latter with an opening (4, 5) for the introduction of an electric power cable into it, providing the envelope (10) with at least one further opening (19) and sealingly attaching a tubular projection (11) onto the wall (17) of the envelope (10) such that that it covers said further opening (19) and hermetically seals the latter.

14. A method according to claim 13, **characterised in that** the tubular projection (11) comprises a metallic material and that it is welded to the wall (17) of the metallic envelope (10).

15. An electric power cable installation in which a cable casing of a cable joint or cable termination is submersed in a mass of water, **characterised in that** said cable casing is a cable casing according to any one of claims 1-12.
